# EUROPÄISCHE PATENTSCHRIFT

(11) **EP 2 302 751 B1**
(45) Veröffentlichungstag und Bekanntmachung des Hinweises auf die Patenterteilung: **04.05.2016**
(21) Anmeldenummer: 09009589.4
(22) Anmeldetag: 23.07.2009
(51) Int. Cl.: H02G 3/18, A47B 21/06

(54) **Anschlusseinheit zum Einsetzen in einer Aussparung in einer Platte**
Connecting unit for insertion in an opening in a board
Unité de connexion destinée à l'utilisation dans un évidement dans une plaque

(43) Veröffentlichungstag der Anmeldung: 30.03.2011
(73) Patentinhaber: Steelcase Inc., Grand Rapids, Michigan 49508 (US)
(72) Erfinder: Deissler, Lothar, 85591 Vaterstetten (DE)
(74) Vertreter: Andrae | Westendorp Patentanwälte Partnerschaft

(56) Entgegenhaltungen:
- EP-A- 1 085 631
- DE-U1- 20 206 740

## Beschreibung

Die Erfindung betrifft eine Anschlusseinrichtung zum Einsetzen in einer Aussparung in einer Platte, insbesondere in einer Tischplatte eines Bürotisches, nach dem Oberbegriff des Anspruches 1.

Bei einer derartigen Anschlusseinrichtung handelt es sich beispielsweise um eine Steckdoseneinheit zur Stromversorgung. Alternativ und ergänzend können aber auch sonstige Kommunikationsbuchsen oder Anschluss-Schnittstellen vorgesehen sein, beispielsweise zum Anschluss eines Netzkabels für eine LAN- oder WLAN-Verbindung eines PC's oder Laptops bei einer Telefonleitung etc..

Derartige Anschlusseinrichtungen werden heutzutage vielfach in Arbeitstischen verwendet. Dazu weisen die Arbeitstische in der Regel in ihrer Arbeitsplatte eine Ausnehmung auf, in der eine gehäuse- oder rahmenförmige Tragkonstruktion untergebracht ist. In diesem Bereich werden dann die Steckdoseneinheiten, allgemein also eine entsprechende Anschlusseinheit untergebracht, um je nach Bedarf einen PC, einen Monitor, einen Laptop etc. z.B. mit Strom versorgen zu können. Bei Bedarf können, wie erwähnt, auch die anderen Schnittstelleneinheiten vorgesehen sein, um eine Netzverbindung, eine Telefonverbindung etc. herstellen zu können. Einschränkungen bestehen insoweit nicht.

Eine mit einem Deckel verschließbare Steckdoseneinheit der o.g. Gattung ist beispielsweise aus der DE 202 06 740 U1 bekannt geworden. In einer entsprechenden Ausnehmung einer Tischplatte ist ein Gehäuse einsetzbar, in welchem über eine horizontale Verschwenkachse die Steckdoseneinheit drehbar gelagert ist. Diese Steckdoseneinheit weist z.B. parallel zur Einsteckrichtung in einer stromführenden Steckdose eine deckel- oder klappenförmige Abdeckung auf, die in Verstauposition parallel zur Oberfläche der mit der Ausnehmung versehenen Tischplatte zu liegen kommt. Durch Verschwenken dieser Kappe um ihre horizontale Achse wird diese deckel- oder klappenförmige Abdeckung von ihrer üblicherweise horizontalen Verschließstellung in ihre etwa vertikale Öffnungsstellung verschwenkt, und zwar unter Mitnahme der auf der Unterseite der Klappe befindlichen Steckdoseneinheit.

Gemäß der vorstehend genannten Vorveröffentlichung verläuft dabei die horizontale Verschwenkachse zum Verschwenken der Steckdoseneinheit nicht in Längsrichtung der Steckdoseneinheit sondern quer dazu, so dass in Funktionsstellung die Steckdoseneinheit in einem erheblichen Maße, unter Umständen mit mehreren übereinander liegenden Steckdosen, oberhalb der Tischebene zu liegen kommt, was insgesamt zu einer wenig ansprechenden Gesamtgestaltung führt.

Eine Anschlusseinrichtung mit einer Abdeckklappe, unterhalb der die Steckdosenleiste vorgesehen ist, ist beispielsweise auch aus der EP 1 862 091 A1 bekannt geworden. Diese Abdeckklappe mit der darunter befindlichen Steckdosenleiste kann um eine parallel zur Länge der Steckdosenleiste verlaufende und quer dazu versetzt liegende Horizontalachse verschwenkt werden. Durch eine spezifische Halte- und Fixiereinrichtung im Bereich der Verschwenkachse kann die Klappe in ihrer eher vertikal ausgerichteten Funktionsstellung verankert werden, so dass die an der Unterseite der Klappe befindliche Steckdosenleiste in dieser Funktionsstellung oberhalb der Tischplattenebene liegend frei zugänglich ist.

Eine insoweit teilweise vergleichbare Anordnung ist auch aus der EP 0 881 729 A2 bekannt geworden. In diesem Falle ist die Steckdosenleiste um eine in deutlichem Abstand unterhalb der oberen Tischplattenebene liegenden horizontalen Verschwenkachse verschwenkbar, wobei die Steckdosenleiste gleichzeitig mit zwei parallel zueinander verlaufenden Klappen versehen ist. Beide parallel zueinander längs der Steckdosenleiste verlaufenden Klappen weisen eine gemeinsame etwa mittig liegende Drehachse auf, über die die beiden Klappen miteinander verbunden sind. Durch Verschwenken der einen, mit der Gehäuseaufnahme für die Steckdosenleiste fest verbundenen Klappe wird dabei die Steckdosenleiste um die unterhalb der Tischplattenebene liegende horizontale Verschwenkachse verschwenkt, bis die Steckdosenleiste mit ihren Zugangsöffnungen vertikal nach oben weist. In dieser Position kommt dann die mit der Steckdosenleiste fest verbundene Abdeckklappe vertikal nach oben verlaufend zu liegen. Gleichzeitig ergibt sich eine Gesamtverschwenkung bzw. -verschiebung der Anordnung, so dass die zweite, etwa horizontal verlaufende Abdeckklappe über den zur Ausnehmung in der Tischplatte benachbarten Bereich der Tischoberseite auf der Tischplatte ruhend verschoben wird. Gleichzeitig wird dadurch der gesamte Bereich der Ausnehmung der Tischplatte mit der rahmen- oder gehäuseförmigen Ausdehnung freigelegt, so dass nicht nur die Steckdosenleiste allein frei zugänglich ist, sondern auch noch der gesamte Raum daneben. Dies führt zur Freigabe eines verhältnismäßig großen Öffnungsbereiches, der funktionstechnisch nicht benötigt wird.

Eine gattungsbildende Anschlusseinrichtung ist aus der EP 1 085 631 A1 bekannt geworden. Sie zeichnet sich durch eine in einer Tischoberfläche einsetzbare Einrichtung aus, die zwei verschwenkbare Klappen umfasst. Beide Klappen weisen an ihren entfernt liegenden Längsseiten Verschwenkachsen auf, so dass sie zwischen ihrer Verschluss- und ihrer Öffnungsstellung gegensinnig verschwenkbar sind. In Verschlussstellung liegen beide Klappen mit ihrer nach oben weisenden Außenseite zumindest näherungsweise in der Ebene der Tischplattenebene.

An der ersten Klappe ist an deren Unterseite eine Anschlusseinheit vorgesehen, an der beispielsweise Strom führende Buchsen oder Anschlussbuchsen zum Anschluss eines Computers zur Verbindung zu einem Computernetzwerk etc. vorgesehen sind.

Um hier Kabel anschließen zu können, wird die erste Klappe mit ihrer auf der Unterseite befindlichen Anschlusseinheit von ihrer in der Tischplattenebene liegenden Verschlussstellung angehoben und dabei auch die zweite Klappe gegensinnig mit verschwenkt. Dabei kann die erste Klappe mit der Anschlusseinheit soweit angehoben werden, dass anschließend die zweite Klappe wieder in ihre horizontale Verschlussstellung zurückfällt. In dieser Stellung kann dann die erste Klappe mit der darunter befindlichen Anschlusseinheit soweit abgesenkt werden, bis eine unten liegende Kante der Anschlusseinheit auf der Oberseite der sich wieder in ihrer horizontalen Verschlussstellung befindlichen zweiten Klappe aufliegt. Da die zweite Klappe über ihre Horizontalstellung anschlagsbedingt nicht weiter nach unten abgesenkt werden kann, ruht somit die Anschlusseinheit auf der Oberseite der zweiten Klappe. Dadurch können die an der Anschlusseinheit ausgebildeten Anschlüsse etwa in einem 45° Winkel gegenüber einer Horizontalebene, die die Fläche der Tischplatte darstellt, ausgerichtet sein.

Aufgabe der vorliegenden Erfindung ist es von daher ausgehend von dem zuletzt genannten gattungsbildenden Stand der Technik eine verbesserte Lösung für eine Anschlusseinrichtung zu schaffen, wobei die Anordnung nicht nur ästhetisch ansprechend, sondern auch funktionell einfach aufgebaut und handhabbar sein soll, was insbesondere auch für eine sichere Verankerung der verschwenkten Anschlusseinheit in ihrer Funktionsstellung betrifft.

Die Aufgabe wird erfindungsgemäß entsprechen den im Anspruch 1 angegebenen Merkmalen gelöst. Vorteilhafte Ausgestaltungen der Erfindung sind in den Unteransprüchen angegeben.

Durch die vorliegende Erfindung wird eine ästhetisch sehr ansprechende und dabei funktionell einfachst handhabbare, in einer Tischplatte unterbringbare elektrische Anschlusseinheit geschaffen. Diese kann problemlos von ihrer Verschluss- oder Verstaupositon in ihre Funktionsstellung verschwenkt bzw. rückverschwenkt werden.

Dabei geht die Erfindung ebenfalls davon aus, dass eine entsprechende Ausnehmung in einer Platte, insbesondere Tischplatte durch zwei parallel zueinander angeordnete deckelförmige Klappen verschließbar ist, die in ihrer Verschlussposition in etwa in der oberen Tischplattenebene liegen.

Um nunmehr die Anschlusseinheit in ihre Funktionsstellung zu bringen, muss lediglich die eine Verschlussklappe von ihrer üblicherweise horizontalen Verschlussstellung in ihre, in angehobener Position verschwenkte Funktionsstellung gebracht werden (durch Verschwenken um ihre Horizontalachse), wobei die an der Klappenunterseite befindliche Anschlusseinheit dadurch automatisch ebenfalls aus der Ausnehmung der Tischplatte heraus verschwenkt wird. In der Funktionsstellung liegen dann die Anschlusseinheiten von oben her frei zugänglich.

Im Rahmen der Erfindung sind dabei die beiden Verschlussklappen doppelflügelartig um jeweils entfernt zueinander liegende bevorzugt parallel verlaufende Achsen gelagert, so dass beide Verschlussklappen gegensinnig zueinander verschwenkt werden können. Im Rahmen der Erfindung ist nunmehr vorgesehen, dass bei Verschwenken der einen Verschlussklappe (an deren Unterseite die Steckdose oder Steckdosenleiste, allgemein die Anschlusseinheit vorgesehen ist) von ihrer Verstauposition in ihre Funktionsstellung, also in Öffnungsrichtung, gleichzeitig die zweite Verschlussklappe durch die Anschlusseinheit gegensinnig mitgenommen und mit verschwenkt wird. An der zur Verschlussklappe gegenüberliegenden Seite der Anschlusseinheit oder eines die Anschlusseinheit aufnehmenden Gehäuses ist ein oder sind mehrere Vorsprünge, Hinterschneidungen oder sonstige Formgebungen vorgesehen, in denen ein an der zweiten Klappe ausgebildetes Eingriffselement automatisch eingreift. Dieses Eingriffselement kann auch die zur Verschwenkachse gegenüberliegende Begrenzungskante der zweiten Verschlussklappe sein. Dadurch wird automatisch die erste Verschlussklappe mit der Anschlusseinheit in dieser Funktionsstellung gehalten, in der die Anschlusseinheit von oben her frei zugänglich ist.

Die Besonderheit im Rahmen der Erfindung ist dabei derart, dass sich in Funktionsstellung bei ausgeschwenkter Anschlusseinheit beide Klappen in einer, gegenüber ihrer horizontalen gemeinsamen Ebene liegenden Verschlussstellung, aufgeklappten Funktionsstellung befinden und zwar symmetrisch zu einer mittleren vertikalen Symmetrieebene (vertikal zur Tischplattenebene oder zur Funktionsstellung der Klappen). Dabei sollen die beiden Klappen in einem Winkel von 50° bis 80° aufeinander zu laufen, wobei der Winkel gegenüber einer durch die geschlossenen Klappen gebildeten Ebene gemessen wird.

Zum Verschließen der Gesamtanordnung muss nur die zweite Verschlussklappe nach geringfügigem weiterem Verschwenken der ersten Verschlussklappe in Öffnungsrichtung angehoben werden, um dann beide Verschlussklappen in ihre Verschlussstellung aufeinander zu zu verschwenken.

Die Erfindung wird nachfolgend anhand von Zeichnungen näher erläutert. Dabei zeigen im Einzelnen:
- Figur 1 :: eine schematische Draufsicht auf einen Ausschnitt einer Tischplatte, die durch zwei parallel zueinander verlaufende deckelförmige Klappen verschlossen ist;
- Figur 2 :: eine schematische perspektivische Darstellung eines Rahmens zur Halterung der Verschließeinrichtung in Form von zwei Klappen der an einer Klappe ausgebildeten Anschlusseinheit ;
- Figur 3 :: eine perspektivische Ansicht auf die Anschlusseinheit mit den zugehörigen, im Rahmen eingefügten Klappen in Verschlussposition;
- Figur 4 :: eine schematische Querschnittsdarstellung durch das Ausführungsbeispiel gemäß Figur 3 in Schließstellung;
- Figur 5 :: eine schematische perspektivische Darstellung der in Funktionsstellung ausgefahrenen Anschlusseinheit;
- Figur 6 :: eine schematische Stirnseitenansicht durch ein erfindungsgemäßes Ausführungsbeispiel in ausgefahrener Funktionsstellung;
- Figur 7 :: eine zu Figur 6 entsprechende Stirnseitendarstellung als Querschnitt versetzt zum Stirnseitenbereich der Anschlusseinheit; und
- Figur 8 :: eine perspektivische Schnittdarstellung unmittelbar im Bereich der Stirnseite der Anschlusseinheit.

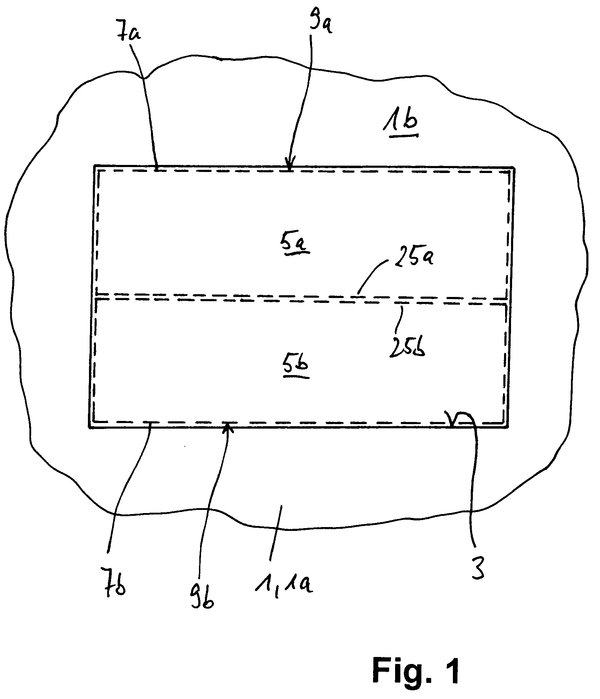

In Figur 1 ist eine schematische Draufsicht auf eine Platte 1 gezeigt, beispielsweise eine Tisch- oder Arbeitsplatte 1a eines nicht näher gezeigten Schreibtisches.

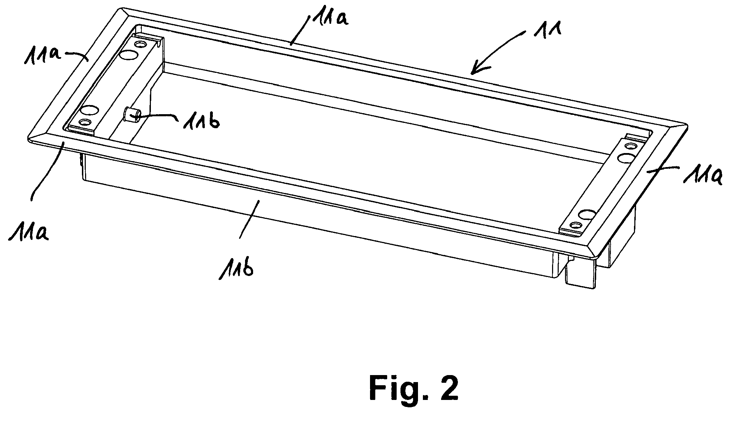

In die Platte 1 ist eine Ausnehmung 3 eingearbeitet, in die ein in Figur 2 in schematischer perspektivischer Darstellung gezeigtes Gehäuse oder gezeigter Rahmen 11 beispielsweise mit einem umlaufenden Flansch oder Steg 11a eingesetzt werden kann. Wird beispielsweise auf der Tischoberseite entsprechend der Größe des Rahmens oder Flansches 11a eine geringfügige Vertiefung entsprechend der Materialdicke des Flansches von oben her in die Platte 1 eingearbeitet, so kann der Rahmen 11 so eingefügt werden, dass die Oberseite des umlaufenden Flansches oder Steges 11a mit der Oberseite 1b der Arbeitsplatte 1, 1a fluchtet. Der umlaufende und in die Öffnung 3 eingeführte Rahmen 11 weist umlaufende Rahmenwände 11b auf, deren Höhe beispielsweise der Dicke der Arbeitsplatte 1, 1a entsprechen kann.

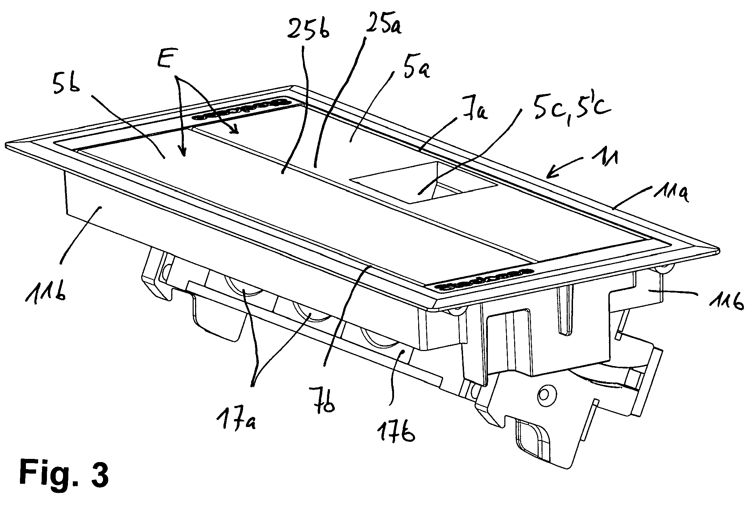

In Figur 3 ist nun in perspektivischer Darstellung die komplette Anschlusseinheit mit dem umlaufenden Rahmen 11 und zwei darin befindlichen Klappen 5, d.h. einer ersten Klappe 5a und einer zweiten Klappe 5b dargestellt, wobei diese beiden Klappen 5a und 5b in der Draufsicht gemäß Figur 1 nur schematisch in Form strichlierter Umrisslinien wiedergegeben sind. Diese beiden Klappen 5a, 5b sind in der Darstellung gemäß Figur 3 in ihrer Verschlussposition gezeigt. Wie sich dabei in einer schematischen Querschnittsdarstellung unmittelbar benachbart zum stirnseitigen Ende des Rahmens 11 ergibt, liegen dabei die beiden Klappen 5 bevorzugt in einer gemeinsamen Ebene E, die nachfolgend auch als Verschlussebene E bezeichnet wird. Diese Ebene E kann bevorzugt im Bereich der Oberseite oder Oberfläche 1b der Tischplatte 1, 1a liegen, um eine ästhetisch ansprechende Verstauposition einzunehmen.

Die beiden Klappen 5, die nachfolgend auch als erste Klappe 5a bzw. zweite Klappe 5b bezeichnet werden, sind doppelflügelartig gestaltet, und weisen dazu jeweils an ihrer zur anderen Platte 5 entfernt liegenden Seite, üblicherweise an ihrer sogenannten Längsseite 7a bzw. 7b, eine Verschwenkachse 9a bzw. 9b auf. Die jeweilige Verschwenkachse 9a, 9b kann dabei durch bolzenartige Vorsprünge gebildet sein, die am inneren Rand des in die Ausnehmung 3 eingesetzten umlaufenden Rahmens 11 vorgesehen sind, und auf die die Klappen 5a, 5b mit ihren gabelförmigen Aufnahmen 5' aufgesetzt werden können. Die Art der konstruktiven Ausgestaltung der Drehachse kann ansonsten beliebig sein und ist auf diese Ausführungsform nicht beschränkt, so dass die erwähnten Verschwenkachsen 9a bzw. 9b allgemein lediglich gegenüber der Gehäuse- oder Rahmenkonstruktion 11 gehalten sind, die im Bereich der Ausnehmung 3 in der Platte 1 montiert ist.

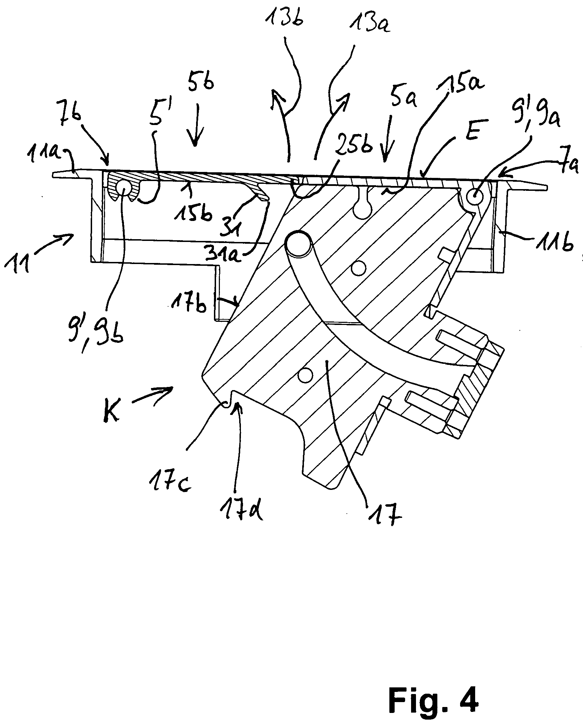

Wie gemäß der Querschnittsdarstellung nach Figur 4 angedeutet ist, können die beiden Klappen entsprechend der Pfeildarstellungen 13a, 13b von ihrer in Figur 1, 3 und 4 gezeigten Verschlussstellung gegensinnig um ihre jeweils außenliegende Verschwenkachsen 9a bzw. 9b verschwenkt werden, vorzugsweise über mehr als 60°.

Wie ferner aus der Querschnittsdarstellung gemäß Figur 4 zu ersehen ist, ist an der unteren Seite 15a der ersten Klappe 5a eine Anschlusseinheit 17 vorgesehen, die mit der Klappe 5a verbunden ist. Mit anderen Worten kann die Anschlusseinheit 17 an der Klappe 5 lösbar befestigt sein. Ebenso möglich ist es auch, dass die Anschlusseinheit 17 mit der zugehörigen ersten Klappe 5a einteilig oder einstückig ausgebildet ist, so dass z.B. die Klappe 5a die Seitenwand der Anschlusseinheit 17 bildet.

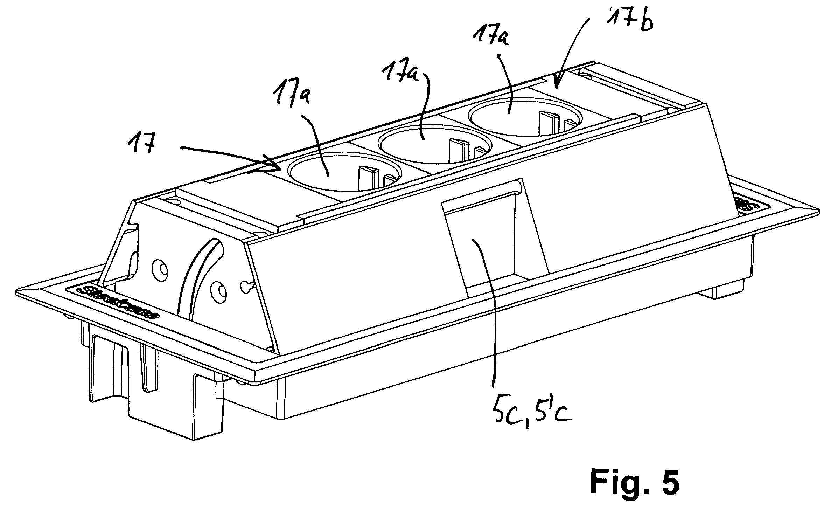

Wie aus der perspektivischen Darstellung gemäß Figur 5 für die in Funktionsstellung ausgeklappte Anschlusseinheit zu ersehen ist, kann diese Anschlusseinheit 17 mehrere in Längsrichtung miteinander angeordnete Anschlussdosen, beispielsweise stromführende Anschlussdosen 17a umfassen, um beispielsweise elektrische Geräte durch Einstecken eines Stromsteckers mit Strom zu versorgen. Ferner können aber auch noch alternativ oder ergänzend weitere Anschluss-Schnittstellen vorgesehen sein, beispielsweise eine Netz-Anschluss-Schnittstelle zum Anschluss eines Netzkabels, um beispielsweise einen Computer mit einem Computernetz zu verbinden. Genauso können weitere Schnittstellen vorgesehen sein, um beispielsweise ein Telefon anzuschließen usw. Beschränkungen bestehen soweit nicht.

In der in den Figuren 3 und 4 ersichtlichen Verschlussstellung ist dabei die Anschlusseinheit 17 so ausgerichtet, dass ihre Oberseite 17b im gezeigten Ausführungsbeispiel eher horizontal ausgerichtet ist, d.h. im gezeigten Ausführungsbeispiel in einem Winkel von 20° bis 40°, d.h. ca. um die 30° gegenüber einer Horizontalen leicht nach oben ausgerichtet geneigt ist.

Um nunmehr die Anschlusseinheit 17 zugänglich zu machen, sie also von ihrer in Figur 1, 2 und 4 gezeigten Verstauposition (Verschlussposition der Klappen 5a, 5b) in ihre in Figur 5 gezeigte Funktionsstellung zu bringen, wird nunmehr die erste Klappe 5a an geeigneter Stelle ergriffen, d.h. indem beispielsweise mit dem Finger in die Ausnehmung oder Griffmulde 5'c gegriffen und darüber die mit der Anschlusseinheit 17 gekoppelte oder fest verbundene Klappe 5a um ihre horizontale Verschwenkachse 9a in ihre aufgeklappte Position entsprechend der Pfeildarstellung 13a (in Figur 4) verschwenkt wird, d.h. bei der Betrachtungsweise gemäß Figur im Uhrzeigersinn. Allgemein empfiehlt es sich also, an der mit der Anschlusseinheit 17 gekoppelten oder verbundenen Klappe 5a eine entsprechende Greifeinrichtung 5c vorzusehen, die in einer bevorzugten Ausführungsform als Ausnehmung 5'c ausgebildet ist.

Da die Anschlusseinheit 17 einen Kollisionsbereich K aufweist, der zur Verschwenkachse 9a entfernt liegt und beim Herausschwenken der Anschlusseinheit 17 in ihre Funktionsstellung oberhalb der Tischplatte 1, 1a zu liegen kommt, wird beim Herausschwenken der Anschlusseinheit 17 aus der in Figur 4 gezeigten Verstauposition in die in Figur 5 gezeigte herausgeklappte Funktionsstellung die gegenüberliegende zweite Klappe 5b um deren Verschwenkachse 9b gegensinnig mit verschwenkt. Während des Verschwenkvorganges aus der Verstauposition gemäß Figur 4 in die Funktionsstellung gemäß Figur 5 gleitet nämlich der Rand 25b, der nachfolgend auch als Schließrand oder Schließkante 25b bezeichnet wird, der zweiten Klappe 5b über die Oberseite 17b der Anschlusseinheit 17 und wird dadurch gemäß Pfeildarstellung 13b in Figur 4 gegensinnig zur ersten Klappe 5a ebenfalls mit verschwenkt.

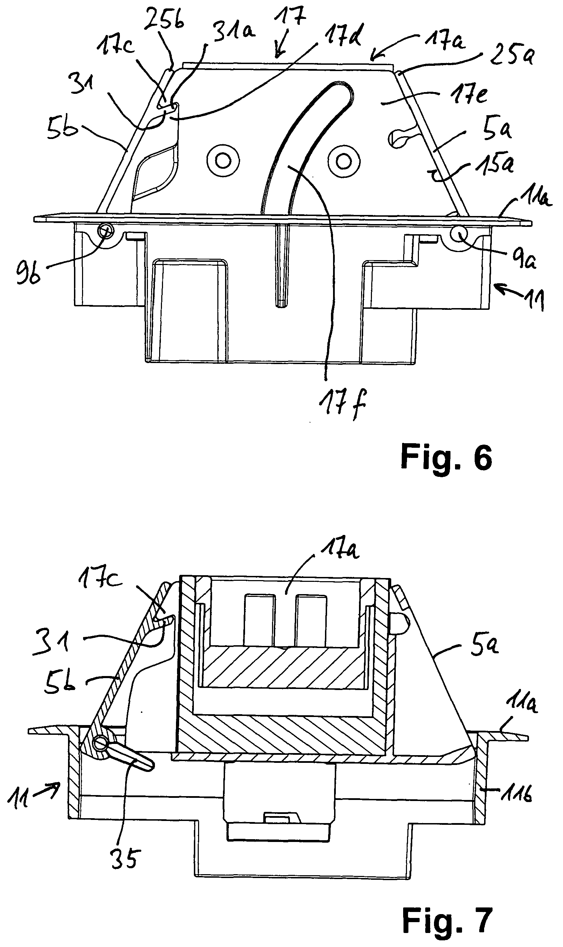

Wie aus der Querschnittsdarstellung gemäß Figur 4 (aber beispielsweise auch aus den Darstellungen gemäß Figur 5 etc.) zu ersehen ist, ist an der Innen- oder Unterseite 15b der zweiten Klappe 5b ein abschnittsweiser oder durchgängiger Vorsprung 31 vorgesehen ist, der nachfolgend teilweise auch als Rastvorsprung oder Rastlippe 31 bezeichnet wird, die an ihrem im Querschnitt zur Klappe 5b gegenüberliegenden freien Ende einen Rand 31a aufweist. Kurz vor Erreichen der endgültigen Funktionsstellung der Anschlusseinheit 17 wird dann nicht mehr der Schließrand oder die Schließkante 25b auf der Oberfläche 17b der Anschlusseinheit 17 gleiten, sondern der freie Rand 31a der Rastlippe 31, wobei - wenn die Anschlusseinheit über ihre endgültige Funktionsstellung geringfügig weiter angehoben wird - der Rastvorsprung bzw. die Rastlippe 31 hinter den Vorsprung 17c in die auf der zur Klappe 5a gegenüberliegenden Seite 17g der Anschlusseinheit 17 ausgebildete Hinterschneidung 17d an der zur ersten Klappe 5a gegenüberliegenden Seite der Anschlusseinheit 17 eingreifen kann. Nach dem Loslassen der ersten Klappe 5a wird dadurch dann die Anschlusseinheit 17 in ihrer Funktionsstellung gehalten, wie dies in der perspektivischen Darstellung gemäß Figur 5 oder in den Schnittdarstellungen gemäß Figuren 6 und 7 bzw. Figur 8 zu ersehen ist.

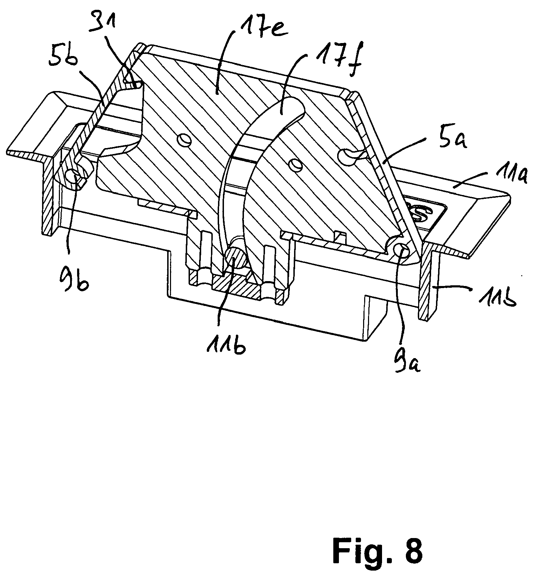

Um die Verschwenkbewegung der Anschlusseinheit zu verbessern und die Gesamtführung zu stabilisieren ist an den gegenüberliegenden Seitenstirnseiten 17e der Anschlusseinheit 17 jeweils eine kreisförmige Ausnehmung 17f eingearbeitet. In diese bogenförmige Ausnehmung 17f greift ein Vorsprung oder Zapfen 11b ein (Figur 2 und 8), der an dem umlaufenden Rahmen 11 nach innen in einer gewissen Axiallänge vorsteht. Figur 8 zeigt dabei eine Querschnittsdarstellung quer zu den Verschwenkachsen 9a, 9b der Anschlusseinheit im Bereich ihrer in Figur 5 hinten rechts liegenden Stirnseite bzw. Stirnwand 17e.

Aus der Querschnittsdarstellung quer zur Verschwenkachse gemäß Figur 7 ist zu ersehen, dass die zweite Klappe 5b noch mit einem im Bereich ihrer Verschwenkachse ausgebildeten internen Hebel 35 versehen ist, der mit der zweiten Klappe 5b mit verschwenkt wird und relativ zur zweiten Klappe 5b unverdrehbar ist. An diesem zweiten Hebel 35 kann eine nicht näher gezeigte Federeinrichtung angreifen, die sich beispielsweise innenliegend am Rahmen 11 abstützt und auf Zug beansprucht ist. Dadurch wird die zweite Klappe 5b jeweils in der Schnittdarstellung gemäß Figur 7 in Rotationsrichtung, d.h. im Uhrzeigersinn druckbeaufschlagt, also immer in Richtung der gegenüberliegenden ersten Klappe 5a und damit in Richtung der zwischen den Klappen befindlichen Anschlusseinheit 17. Dadurch wird die ausgefahrene Anschlusseinheit 17 gemäß Figur 5, 6 oder 7 noch sicherer in ihrer endgültigen Funktionsstellung gehalten.

Somit kann also im geschilderten Umfang allein durch Ergreifen und Verschwenken der ersten Klappe 5a und Verstellen dieser Klappe bis über ihre endgültige Funktionsstellung hinaus und loslassen automatisch sichergestellt werden, dass die Rastlippe 31 an der Innen- oder Unterseite 15b der zweiten Klappe 5b hinter dem Kollisionsvorsprung K, d.h. dem Vorsprung 17c in die dort ausgebildete Hinterschneidung 17d einrastet oder eingreift und dadurch die gesamte Anschlusseinheit in Öffnungsstellung sicher hält. Die erwähnte Rastlippe 31 kann aber auch aus einzelnen oder auch im Extremfall nur einem einzigen, beispielsweise punktförmigen Vorsprung bestehen, der an einem entsprechenden Vorsprung oder einer Hinterschneidung an der Anschlusseinheit oder einem damit verbundenen Funktionsteil eingreift. Beschränkungen bestehen insoweit nicht. Durch diese ineinander greifenden Vorsprünge wird also eine Halte- und/oder Rasteinrichtung geschaffen, die im Prinzip darauf beruht, dass die zweite Klappe 5b die erste Klappe 5a mit der daran befindlichen Anschlusseinheit 17 in Öffnungs- und Funktionsstellung hält und ein unbeabsichtigtes Rückverschwenken in Verschlussposition verhindert. In einer vereinfachten und nicht näher gezeigten Ausführungsform wäre es sogar denkbar, dass auf die Lippe 31 als separates Arretiermittel verzichtet wird, so dass der obere Schließrand 25b der zweiten Klappe 5b als Rastvorsprung 31 in den Vorsprung 17c und/oder die Hinterschneidung 17d der Anschlusseinheit eingreift, um darüber die Anschlusseinheit in Funktions- und Öffnungsstellung zu halten. Dies zeigt, dass hier beliebige Abwandlungen möglich sind.

In dieser Öffnungsstellung sind nunmehr die Anschlussdosen oder Anschluss-Schnittstellen alle von oben her frei zugänglich, wobei die Oberseite 17b der Anschlusseinheit 17 parallel zur Oberseite 1b der Platte 1 verläuft und dabei beispielsweise geringfügigst über die oben liegenden Schließränder 25a bzw. 25b der beiden Klappen 5a, 5b überstehen kann aber nicht überstehen muss.

Wie erwähnt werden zur Funktionssicherheit keine weiteren Maßnahmen benötigt. Gleichwohl kann aber im Bereich der zweiten Klappe 5b oder im Bereich der Verschwenkachse 9b der zweiten Klappe 5b oder an anderer geeigneter Stelle der erwähnte Kraftspeicher oder eine Kraftspeichereinrichtung vorgesehen sein, die die zweite Klappe 5b stets in Verschlussstellung vorspannt, so dass auch in der endgültigen Funktionsstellung gemäß Figur 5 die zweite Klappe 5b sicher an der Anschlusseinheit anliegend gehalten wird, damit diese nicht aus Versehen in ihre Verschlussstellung zurückfallen kann.

Um die Anschlusseinheit 17 wieder zurückzuverschwenken, wird die erste Klappe 5a beispielsweise dadurch, dass man mit dem Finger in die Ausnehmung 5'c greift, geringfügig in Öffnungsstellung weiter verschwenkt, so dass durch der Vorsprung 17c sich von der Dichtlippe 31 entfernt und diese freigibt, so dass die zweite Klappe 5b von der Anschlusseinheit 17 geringfügig weg verschwenkt werden kann. Dadurch ist der Vorsprung 17c der Anschlusseinheit 17 freigegeben, so dass nunmehr die erste Klappe 5a mit der Anschlusseinheit entgegen dem Uhrzeigersinn (in der Darstellung gemäß Figur 6) von ihrer gezeigten Öffnungsstellung nach unten in den Rahmen 17 hinein verschwenkt werden kann. Bereits während des Herabschwenkens der Anschlusseinheit kann die zweite Klappe 5b losgelassen werden, so dass deren oben liegender Schließrand 25b dann auf der Oberseite 17b der Anschlusseinheit 17 aufliegt und die Anschlusseinheit 17 mit der Klappe 5a weiter in Verschlussstellung herabgesenkt werden kann, währenddessen der obere Schließrand 25b der zweiten Klappe 5b über die Oberseite 17b der Anschlusseinheit 17 hinwegbewegt wird. Bei Erreichen der Schließstellung der Klappe 5a fällt dann noch die zweite Klappe 5b in ihre endgültige Schließstellung herab.

Die beiden Klappen können so ausgebildet sein, dass deren Schließränder 25a, 25b in Verschlussstellung unmittelbar parallel zueinander liegen, so dass in dieser Stellung kein oder nur ein geringfügiger Spalt zwischen beiden Schließrändern 25a, 25b besteht. Eventuell ist es aber auch möglich, dass diese Schließränder so ausgebildet sind, dass sie sich in Verschlussstellung zumindest geringfügig überlappen.

Wie insbesondere aus den Stirnseitenansichten zu entnehmen ist, sind in der endgültigen Funktionsstellung die beiden Klappen 5a und 5b leicht schräg aufeinander zu laufend ausgerichtet, so dass sich mit der dazwischen befindlichen Anschlusseinheit 17 eine im Querschnitt trapezförmige Grundform, oder zumindest näherungsweise eine trapezförmige Grundform ergibt. Ansprechend ist dabei vor allem, dass die beiden Klappen 5a, 5b symmetrisch zu einer Mittelsymmetrieebene liegen, also in gleicher Winkellage aufeinander zu laufend ausgerichtet sind. Dabei beträgt die Winkelstellung zwischen der jeweiligen Unterseite 15a bzw. 15b der Klappe 5a bzw. 5b und der horizontal verlaufenden Ebene E etwa 70° bis 80°, im gezeigten Ausführungsbeispiel um 60°. Grundsätzlich ist aber auch eine andere Kinematik möglich, bei welcher die beiden Klappen in unterschiedlicher Winkelstellung gegenüber der Tischoberseite ausgerichtet verlaufen oder im Extremfall sogar mehr oder weniger senkrecht zur Tischplattenoberseite ausgerichtet sind. Beschränkungen bestehen insoweit nicht.

## Patentansprüche

1. Anschlusseinrichtung zum Einsetzen in einer Ausnehmung (3) in einer Platte (1), insbesondere in einer Ausnehmung (3) in einer Tischplatte (1a), mit folgenden Merkmalen:
- es ist eine erste und eine zweite Klappe (5; 5a, 5b) vorgesehen, die zwischen einer Schließ- und einer Öffnungsstellung verschwenkbar sind, wozu die beiden Klappen (5; 5a, 5b) im Bereich oder in der Nähe ihrer jeweils entfernt liegenden Außen- oder Längsseiten (7a, 7b) ihre zugehörige Verschwenkachse (9a, 9b) aufweisen,
- die beiden Verschwenkachsen (9a, 9b) laufen parallel zueinander,
- in Schließstellung der beiden Klappen (5; 5a, 5b) sind diese nebeneinander liegend und mit ihren Oberseiten eine Ebene (E) bildend angeordnet, wobei beide Klappen (5; 5a, 5b) jeweils mit einer Oberseite und einer Unterseite (15a, 15b) versehen sind,
- auf der Unterseite (15a) der ersten Klappe (5a) ist eine Anschlusseinheit (17) mit zumindest einer Anschlussdose (17a) für die Stromversorgung und/oder zumindest einer Netz-Anschluss-Schnittstelle zur Herstellung einer Netzverbindung eines anzuschließenden PC's und/oder eine Telefon-Schnittstelle vorgesehen,
- die Anschlusseinheit (17) ist mit der ersten Klappe (5a) zwischen der Schließ- und der Öffnungsstellung der ersten Klappe (5a) um die Verschwenkachse (9a) verschwenkbar,
- in Funktionsstellung der Anschlusseinheit (17) ist die erste Klappe (5a) aus ihrer Schließstellung soweit in die Öffnungsstellung verschwenkt, dass die Oberseite (17b) der Anschlusseinheit (17), die sich auf der Unterseite (15a) der ersten Klappe (5a) befindet, oberhalb der Ebene (E) zu liegen kommt,
- es ist eine die zweite Klappe (5b) umfassende Halte- und/oder Rasteinrichtung vorgesehen, worüber die beiden Klappen (5a, 5b) und damit die auf der Unterseite der ersten Klappe (5a) vorgesehene Anschlusseinheit (17) in Funktionsstellung gehalten werden, die Anschlusseinheit (17) weist dazu eine Vorsprungs-Einrichtung (17c) auf oder ist mit einer derartigen Vorsprungs-Einrichtung (17c) verbunden, unterhalb derer ein gegenüberliegend zur Verschwenkachse (9b) vorgesehener Schließrand (25b) der zweiten Klappe (5b) oder ein entsprechender Vorsprung (31) eingreift, der mit der zweiten Klappe (5b) verbunden und/oder daran ausgebildet ist, wodurch beide Klappen (5a, 5b) und damit die mit der ersten Klappe (5a) verbundene Anschlusseinheit (17) gegen ein Verschwenken in Schließstellung gesichert sind,
**gekennzeichnet dadurch dass**
- sowohl die erste Klappe (5a) mit ihrer an der Unterseite vorgesehenen Anschlusseinheit (17) als auch die zweite Klappe (5b) aus ihrer gemeinsamen Schließstellung in Öffnungsstellung um ihre jeweilige Verschwenkachse (9a, 9b) derart gegensinnig verschwenkbar sind, dass die erste und die zweite Klappe (5a, 5b) in der Funktionsstellung der Anschlusseinheit (17) mit dieser eine im Querschnitt trapezförmige Grundform bilden und zu einer mittleren Symmetrieebene, die senkrecht zur Ebene (E) zwischen den beiden Klappen (5; 5a, 5b) liegt, symmetrisch und aufeinander zu verlaufend ausgerichtet sind und dabei vorzugsweise in einem Winkel von 50° bis 80° gegenüber der durch die geschlossenen Klappen (5a, 5b) gebildeten Ebene (E) ausgerichtet sind.

2. Anschlusseinrichtung nach Anspruch 1, **dadurch gekennzeichnet, dass** die zweite Klappe (5b) mittels einer Kraftspeicher-Einrichtung (9) in Schließstellung vorgespannt ist.

3. Anschlusseinrichtung nach Anspruch 1 oder 2, **dadurch gekennzeichnet, dass** der an der zweiten Klappe (5b) ausgebildete Vorsprung (31) in Form einer Rastlippe ausgebildet ist.

4. Anschlusseinrichtung nach einem der Ansprüche 1 bis 3, **dadurch gekennzeichnet, dass** an der zur Klappe (5a) gegenüberliegenden Seite (17g) der Anschlusseinheit (17) zumindest ein oder in Längsrichtung der Anschlusseinheit (17) mehrere Vorsprungseinrichtungen (17c) vorgesehen sind, unterhalb derer die zweite Klappe (5b) mit ihrem Vorsprung (31) vorzugsweise in Form einer an der Klappenunterseite (15b) vorgesehenen Rastlippe in Öffnungsstellung der Anschlusseinheit (17) eingreift.

5. Anschlusseinrichtung nach einem der Ansprüche 1 bis 4, **dadurch gekennzeichnet, dass** die erste und die zweite Klappe (5; 5a, 5b) in Öffnungsstellung der Anschlusseinheit (17) in einem Winkel von 50° bis 70° gegenüber der Ebene (E) ausgerichtet sind.

6. Anschlusseinrichtung nach einem der Ansprüche 1 bis 5, **dadurch gekennzeichnet, dass** die beiden Klappen (5; 5a, 5b) mittels einer Gehäuse- oder Rahmenkonstruktion (11) gehalten sind, die in der Ausnehmung (3) der Platte (1) montierbar ist.

7. Anschlusseinrichtung nach Anspruch 6, **dadurch gekennzeichnet, dass** die beiden Klappen (5; 5a, 5b) von der Gehäuse- oder Rahmenkonstruktion (11) umgeben sind, dessen Oberseite in der Ebene (E) oder geringfügig darüber liegt, wobei der Höhenversatz zwischen der Oberseite der beiden Klappen (5; 5a, 5b) und der Oberseite des Rahmens (11) weniger als 20%, insbesondere weniger als 15% oder weniger als 10% und insbesondere weniger als 5% der Höhe des Rahmens (11) betragen soll.

8. Anschlusseinrichtung nach einem der Ansprüche 1 bis 7, **dadurch gekennzeichnet, dass** zumindest eine Klappe (5a) und vorzugsweise beide Klappen (5; 5a, 5b) über eine Greifeinrichtung (5c) zum Ergreifen und Verschwenken verfügen, vorzugsweise in Form einer Griffausnehmung oder Griffmulde (5'c).

9. Anschlusseinrichtung nach einem der Ansprüche 1 bis 8, **dadurch gekennzeichnet, dass** zumindest an einer und vorzugsweise an beiden gegenüberliegenden Stirnseiten (17e) der Anschlusseinheit (17) eine bogenförmige Ausnehmung (17f) eingearbeitet ist, in welcher ein Vorsprung oder ein stationärer Zapfen (11b) des Rahmens (11) eingreift.

## Claims

1. Connection device for inserting in a recess (3) in a board (1), in particular in a recess (3) in a table top (1 a), comprising the following features:
- a first and a second flap (5; 5a, 5b) are provided, which can be pivoted between a closed and an open position, for which purpose the two flaps (5; 5a, 5b) comprise their associated pivot axes (9a, 9b) in the region of or in the vicinity of their respectively remote outer or longitudinal sides (7a, 7b),
- the two pivot axes (9a, 9b) extend in parallel,
- in the closed position of the two flaps (5; 5a, 5b), said flaps are side by side and are arranged to form a plane (E) by means of their upper faces, the two flaps (5; 5a, 5b) each being provided with an upper face and a lower face (15a, 15b),
- a connection unit (17) comprising at least one power socket (17a) for supplying power and/or at least one network-connection interface for establishing a network connection to a PC to be connected and/or a telephone interface is provided on the underside (15a) of the first flap (5a),
- the connection unit (17) can be pivoted about the pivot axis (9a) between the closed and open positions of the first flap (5a) by means of the first flap (5a),
- in an operational position of the connection unit (17), the first flap (5a) is pivoted out of its closed position into the open position to the extent that the upper face (17b) of the connection unit (17), which is on the lower face (15a) of the first flap (5a), comes to rest above the plane (E),
- a retaining and/or latching device which the second flap (5b) comprises is provided, by means of which device the two flaps (5a, 5b) and thus the connection unit (17) provided on the underside of the first flap (5a) can be kept in the operational position, for this purpose, the connection unit (17) comprises a projection device (17c) or is connected to such a projection device (17c), underneath which a closing edge (25b) of the second flap (5b) that is provided opposite the pivot axis (9b) or a corresponding projection (31) engages and is connected to the second flap (5b) and/or integrally formed thereon, by means of which the two flaps (5a, 5b) and thus the connection unit (17) connected to the first flap (5a) are secured against pivoting into the closed position,
**characterised in that**
- both the first flap (5a) together with its connection unit (17) provided on the lower face and the second flap (5b) can be pivoted in opposite directions about their respective pivot axes (9a, 9b) out of their common closed position into an open position such that, in the operational position of the connection unit (17), the first and the second flap (5a, 5b) form, together with said connection unit, a basic shape that is trapezoidal in cross section, and said flaps are symmetrical to a central plane of symmetry which is perpendicular to the plane (E) between the two flaps (5; 5a, 5b), and are oriented to extend towards one another, preferably oriented at an angle of from 50° to 80° relative to the plane (E) formed by the closed flaps (5a, 5b).

2. Connection device according to claim 1, **characterised in that** the second flap (5b) is pre-stressed into the closed position by means of an energy-storing device (9).

3. Connection device according to either claim 1 or claim 2, **characterised in that** the projection (31) formed on the second flap (5b) is in the form of a latching lip.

4. Connection device according to any of claims 1 to 3, **characterised in that**, on the side (17g) of the connection unit (17) opposite the flap (5a), at least one or, in the longitudinal direction of the connection unit (17), more projection devices (17c) are provided, underneath which the second flap (5b) engages, in the open position of the connection unit (17), by means of its projection (31), which is preferably in the form of a latching lip provided on the lower face (15b) of the flap.

5. Connection device according to any of claims 1 to 4, **characterised in that** the first and the second flap (5; 5a, 5b) are oriented at an angle of from 50° to 70° relative to the plane (E) in the open position of the connection unit (17).

6. Connection device according to any of claims 1 to 5, **characterised in that** the two flaps (5; 5a, 5b) are retained by means of a housing structure or frame structure (11) which can be mounted in the recess (3) in the board (1).

7. Connection device according to claim 6, **characterised in that** the two flaps (5; 5a, 5b) are surrounded by the housing structure or frame structure (11), the upper face of which is in or slightly above the plane (E), the vertical offset between the upper face of the two flaps (5; 5a, 5b) and the upper face of the frame (11) being intended to be less than 20 %, in particular less than 15 % or less than 10 %, and in particular less than 5 %, of the height of the frame (11).

8. Connection device according to any of claims 1 to 7, **characterised in that** at least one flap (5a) and preferably both flaps (5; 5a, 5b) have a grip device (5c) for gripping and pivoting, which device is preferably in the form of a handhold or a recessed grip (5'c).

9. Connection device according to any of claims 1 to 8, **characterised in that** a curved recess (17f) is made at least on one and preferably on both opposing end faces (17e) of the connection unit (17), in which recess a projection or a stationary pin (11 b) of the frame (11) engages.

## Revendications

1. Système de connexion destiné à être mis en place dans un évidement (3) dans une plaque (1), en particulier dans un évidement (3) dans un plateau de table (1a), comprenant les éléments techniques suivants :
- il est prévu un premier et un second volet (5 ; 5a, 5b), qui sont capables de pivoter entre une position fermée et une position ouverte, ce pourquoi les deux volets (5 ; 5a, 5b) comportent leurs axes de pivotement associés (9a, 9b) dans la région ou dans le voisinage de leurs côtés extérieurs ou côtés longitudinaux (7a, 7b) situés respectivement en éloignement,
- les deux axes de pivotement (9a, 9b) s'étendent parallèlement l'un à l'autre,
- dans la position fermée des deux volets (5 ; 5a, 5b), ceux-ci sont agencés l'un à côté de l'autre et forment un plan (E) avec leurs faces supérieures, et les deux volets (5 ; 5a, 5b) sont respectivement dotés d'une face supérieure et d'une face inférieure (15a, 15b),
- sur la face inférieure (15a) du premier clapet (5a) il est prévu une unité de connexion (17) avec au moins une prise de connexion (17a) pour l'alimentation électrique et/ou avec au moins une interface de connexion de réseau pour établir une liaison de réseau pour un ordinateur personnel à raccorder et/ou une interface téléphonique,
- l'unité de connexion (17) est capable de pivoter avec le premier volet (5a) entre la position fermée et la position ouverte du premier volet (5a) autour de l'axe de pivotement (9a),
- dans la position fonctionnelle de l'unité de connexion (17), le premier volet (5a) est pivoté hors de sa position fermée jusque dans la position ouverte aussi loin que la face supérieure (17b) de l'unité de connexion (17), qui se trouve sur la face inférieure (15a) du premier volet (5a), vient se placer au-dessus du plan (E),
- il est prévu un moyen de maintien et/ou un moyen d'enclenchement incluant le second volet (5b), au moyen duquel les deux volets (5a, 5b) et avec eux l'unité de connexion (17) prévue sur la face inférieure du premier volet (5a) sont maintenus en position fonctionnelle, l'unité de connexion (17) comporte à cet effet un moyen en saillie (17c) ou est reliée avec un tel moyen en saillie (17c), au-dessous duquel s'engage une bordure de fermeture (25b), prévue à l'opposé de l'axe de pivotement (9b), du second volet (5b) ou bien une saillie correspondante (31), qui est reliée avec le second volet (5b) ou qui est réalisée sur celui-ci, en raison de quoi les deux volets (5a, 5b) et avec eux l'unité de connexion (17) reliée avec le premier volet (5a) sont bloqués à l'encontre d'un pivotement vers la position fermée,
**caractérisé en ce que**
- aussi bien le premier volet (5a) avec son unité de connexion (17) prévue sur la face inférieure, que le second volet (5b) sont capables de pivoter hors de leur position fermée commune jusque dans la position ouverte en pivotant en sens contraire autour de leurs axes de pivotement respectifs (9a, 9b), de telle façon que le premier et le second volet (5a, 5b) forment, dans la position fonctionnelle de l'unité de connexion (17), avec celle-ci une forme de base à section trapézoïdale et sont orientés vers un plan de symétrie médian, disposé perpendiculairement au plan (E) entre les deux volets (5 ; 5a, 5b) de manière à s'étendre symétriquement et en convergeant l'un vers l'autre, et sont ici dirigés de préférence sous un angle de 50° à 80° par rapport au plan (E) formé par les volets fermés (5a, 5b).

2. Système de connexion selon la revendication 1,
**caractérisé en ce que** le second volet (5b) est précontraint en position fermée au moyen d'un dispositif à accumulation de force (9).

3. Système de connexion selon la revendication 1 ou 2,
**caractérisé en ce que** la saillie (31) réalisée sur le second volet (5b) est réalisée sous la forme d'une lèvre d'enclenchement.

4. Système de connexion selon l'une des revendications 1 à 3, **caractérisé en ce que** sur le côté (17g), opposé au volet (5a), de l'unité de connexion (17) il est prévu au moins un système à saillie (17c) ou plusieurs systèmes à saillie (17c) en direction longitudinale de l'unité de connexion (17), au-dessous duquel/desquels s'engage le second volet (5b) avec sa saillie (11), de préférence sous la forme d'une lèvre d'enclenchement prévue sur la face inférieure (15b) du volet, dans la position ouverte de l'unité de connexion (17).

5. Système de connexion selon l'une des revendications 1 à 4,
**caractérisé en ce que** le premier et le second volet (5 ; 5a, 5b) sont dirigés, dans la position ouverte de l'unité de connexion (17), sous un angle de 50° à 70° par rapport au plan (E).

6. Système de connexion selon l'une des revendications 1 à 5,
**caractérisé en ce que** les deux volets (5 ; 5a, 5b) sont maintenus au moyen d'une structure formant boîtier ou d'une structure formant cadre (11), qui peut être montée dans l'évidement (3) de la plaque (1).

7. Système de connexion selon la revendication 6,
**caractérisé en ce que** les deux volets (5 ; 5a, 5b) sont entourés par la structure formant boîtier ou la structure formant cadre (11), dont la face supérieure est disposée dans le plan (E) ou légèrement au-dessus de celui-ci, et le décalage en hauteur entre la face supérieure des deux volets (5 ; 5a, 5b) et la face supérieure du cadre (11) s'élève à moins de 20 %, en particulier moins de 15 %, ou au moins de 10 %, et en particulier moins de 5 % de la hauteur du cadre (11).

8. Système de connexion selon l'une des revendications 1 à 7,
**caractérisé en ce qu'**au moins un volet (5a) et de préférence les deux volets (5 ; 5a, 5b) disposent d'un moyen d'agrippement (5c) pour l'agrippement et le pivotement, de préférence sous la forme d'un évidement ou d'une moulure d'agrippement (5'c).

9. Système de connexion selon l'une des revendications 1 à 8,
**caractérisé en ce qu'**un évidement (17f) en forme d'arc est ménagé sur au moins et de préférence sur les deux côtés frontaux opposés (17e) de l'unité de connexion (17), évidement dans lequel s'engage une saillie ou un tenon stationnaire (11b) du cadre (11).
